# EUROPÄISCHE PATENTANMELDUNG

(11) **EP 2 189 629 A1**
(43) Veröffentlichungstag der Anmeldung: **26.05.2010**
(21) Anmeldenummer: 08169782.3
(22) Anmeldetag: 24.11.2008
(51) Int. Cl.: F01D 25/20, F02C 6/12

(54) **Druckeinstelleinheit**

(71) Anmelder: ABB Turbo Systems AG, 5400 Baden (CH)
(72) Erfinder: Di Pietro, Marco, 4665 Oftringen (CH); Neuenschwander, Peter, 8006 Zürich (CH)
(74) Vertreter: ABB Patent Attorneys

(57) **Zusammenfassung**

Der Abgasturbolader umfasst einen Verdichter (10) und eine Turbine (20) sowie eine mit Schmiermittel versorgte Lagerung der rotierenden Teile in einem Lagergehäuse (30). Die Schmiermittel werden über einen Schmiermitteleintritt (31) in das Lagergehäuse (30) geführt. Am Lagergehäuse (30) im Bereich des Schmiermitteleintritts (31) ist eine Druckeinstelleinheit vorgesehen ist, mit welcher der Druck des Schmiermittels bevor dieses ins Lagergehäuse (30) des Abgasturboladers eintritt eingestellt werden kann.

Ändert sich der Förderdruck des Schmiermittels während der Lebensdauer der Anlage, kann der Betreiber den Druck des Schmiermittels auf den optimalen Wert nachstellen.

## Beschreibung

### Technisches Gebiet

Die Erfindung bezieht sich auf das Gebiet der mittels Abgasturboladern aufgeladenen Brennkraftmaschinen.

Sie betrifft einen Abgasturbolader mit einer Druckeinstelleinheit zum Einstellen des Drucks des für die Lagerung der rotierenden Teile des Abgasturbolader benötigen Schmiermittels.

### Stand der Technik

Für die Leistungssteigerung einer Brennkraftmaschine werden heutzutage standardmässig Abgasturbolader eingesetzt, mit einer Turbine im Abgastrakt der Verbrennungskraftmaschine und mit einem der Verbrennungskraftmaschine vorgelagerten Verdichter. Die Abgase der Brennkraftmaschine werden dabei in der Turbine entspannt und in Drehenergie ungewandelt. Die gewonnene Drehenergie wird mittels einer Welle auf den Verdichter übertragen, welcher die der Brennkraftmaschine zugeführte Luft verdichtet. Durch die Verwendung der Energie der Abgase zur Verdichtung der dem Verbrennungsprozess in der Brennkraftmaschine zugeführten Luft, können der Verbrennungsprozess und der Wirkungsgrad der Brennkraftmaschine optimiert werden.

Ein Abgasturbolader setzt sich aus einem Rotor, bestehend aus einer Welle, einem Verdichterrad und einem Turbinenrad, aus strömungsführenden Gehäuseteilen (Verdichtergehäuse resp. Turbinengehäuse) und aus dem Lagergehäuse zusammen. Die Welle ist im Lagergehäuse in einem oder mehreren Lagern gelagert, welche mit einem Schmiermittel geschmiert werden. Um ein Austreten des Schmiermittels in Richtung Turbine oder Verdichter zu verhindern, weist die Welle im Lagergehäuse je eine Abdichtung Richtung Turbine und Verdichter auf.

Bei der Inbetriebnahme von Brennkraftmaschinen mit Abgasturboladern muss der Druck, unter welchem das Schmiermittel in das Lagergehäuse des Abgasturboladers eingespeist wird den Erfordernissen des Turboladers angepasst werden. Bei herkömmlichen Abgasturboladern wird dafür beim Schmiermitteleintritt eine Blende eingesetzt. Sollte der mit der eingesetzten Blende resultierende Druck nicht der Vorgabe entsprechen, muss die Brennkraftmaschine abgestellt werden, damit ein Monteur die Schmiermittelzufuhr zum Abgasturbolader unterbrechen und die Blende austauschen kann. Das Abstellen einer Brennkraftmaschine aufgrund des Anpassens des Schmiermitteldrucks ist insbesondere bei grossen 2-Takt-Dieselmotoren unerwünscht. Aufgrund der hohen Brennstoffkosten und des Termindrucks bei der Inbetriebnahme wird der Schmiermitteldruck durch den Motorenbauer oft nicht auf den optimalen sondern auf einen sicher zulässigen Wert eingestellt. In der Folge wird mehr Schmiermittel durch die Schmiermittelpumpen als minimal erforderlich gefördert, was die Betriebskosten für den Betreiber während der gesamten Lebensdauer der Anlage erhöht. Es besteht für den Betreiber der Anlage auch kaum einmal eine Möglichkeit, den Druck anzupassen, selbst wenn dies beispielsweise aufgrund der Verschmutzung des Wärmetauschers dringend notwendig sein könnte.

### Kurze Darstellung der Erfindung

Der Erfindung liegt die Aufgabe zugrunde, den Abgasturbolader einer Brennkraftmaschine mit variierbarem Schmiermitteldruck betreiben zu können.

Erfindungsgemäss wird hierzu am Schmiermitteleintritt des Lagergehäuses des Abgasturboladers eine von aussen einstellbare Blende oder Drossel vorgesehen. Damit kann Schmiermitteleintrittsdruck während der Inbetriebnahme der Brennkraftmaschine stufenlos den Erfordernissen angepasst werden. Ändert sich der Förderdruck während der Lebensdauer der Anlage, kann der Betreiber den Druck des Schmiermittels auf den optimalen Wert nachstellen.

Damit der aktuelle Druck oder andere Eigenschaften des Schmiermittels unmittelbar am Ort der Einstelleinrichtung abgelesen werden kann, können in der Druckeinstelleinheit Anschlüsse für Druck- und die Temperatursensoren vorgesehen sein.

Weitere Vorteile ergeben sich aus den abhängigen Ansprüchen.

### Kurze Beschreibung der Zeichnungen

Nachfolgend ist anhand der Figuren ein Ausführungsbeispiel der erfindungsgemässen Druckeinstelleinheit schematisch dargestellt und näher erläutert. In allen Figuren sind gleichwirkende Elemente mit gleichen Bezugszeichen versehen. Es zeigen:
- Fig. 1: eine Ansicht in radialer Richtung eines Abgasturboladers mit einem Verdichter, einer Turbine und einem Lagergehäuse mit einer Schmiermittelversorgung,
- Fig. 2: eine Ansicht in axialer Richtung auf den Eintritt der Schmiermittelversorgung des Abgasturboladers nach Fig. 1 mit aufgesetzter, erfindungsgemässer Druckeinstelleinheit,
- Fig.3: eine Ansicht von schräg vorne auf die Eintrittsseite der nicht auf dem Abgasturbolader aufgesetzten Drucksteinstelleinheit nach Fig. 2,
- Fig.4: eine Ansicht von schräg hinten auf die Eintrittsseite der nicht auf dem Abgasturbolader aufgesetzten Drucksteinstelleinheit nach Fig. 2,
- Fig. 5: einen entlang V-V geführten Schnitt durch die Drucksteinstelleinheit nach Fig. 2,
- Fig. 6: einen entlang VI-VI geführten Schnitt durch die Drucksteinstelleinheit nach Fig. 2,
- Fig. 7: einen entlang VII-VII geführten Schnitt durch die Drucksteinstelleinheit nach Fig. 5, und

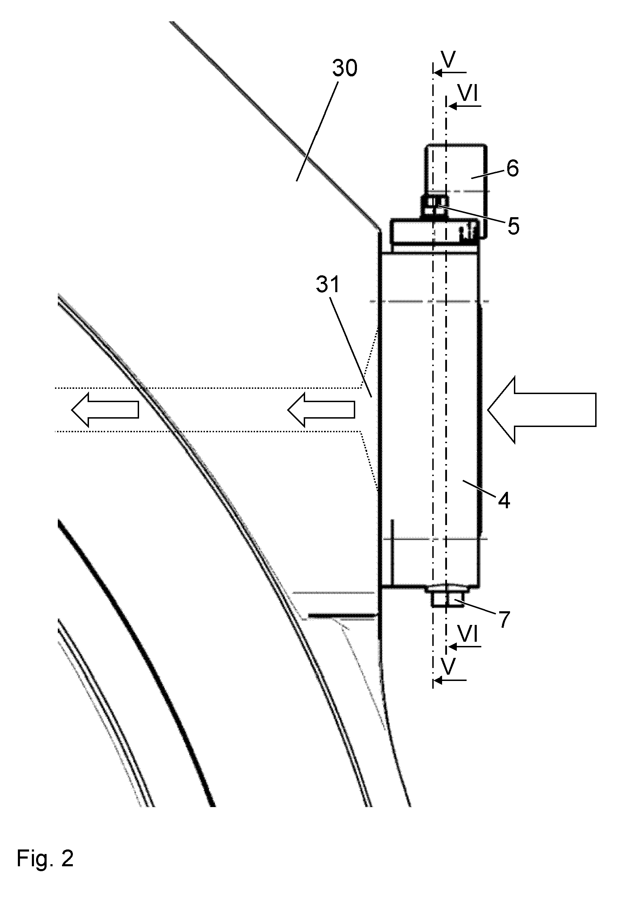

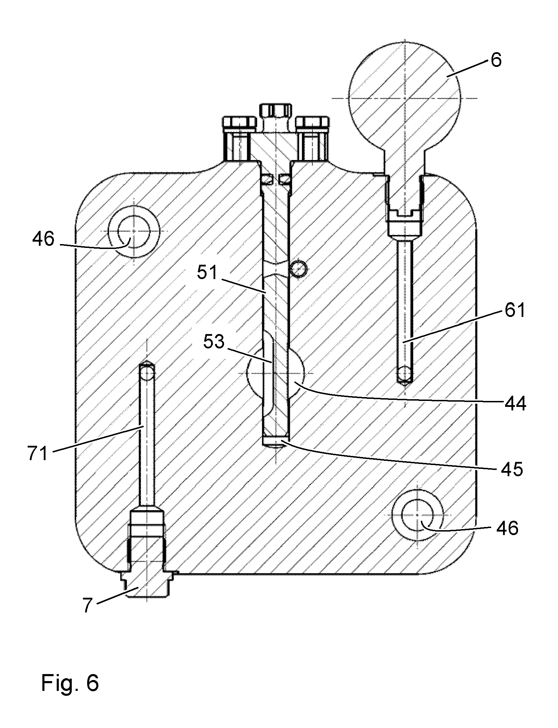

- Fig. 6: eine Detaildarstellung des ausgebauten Einstellelements der Druckeinstelleinheit nach Fig. 2.

### Weg zur Ausführung der Erfindung

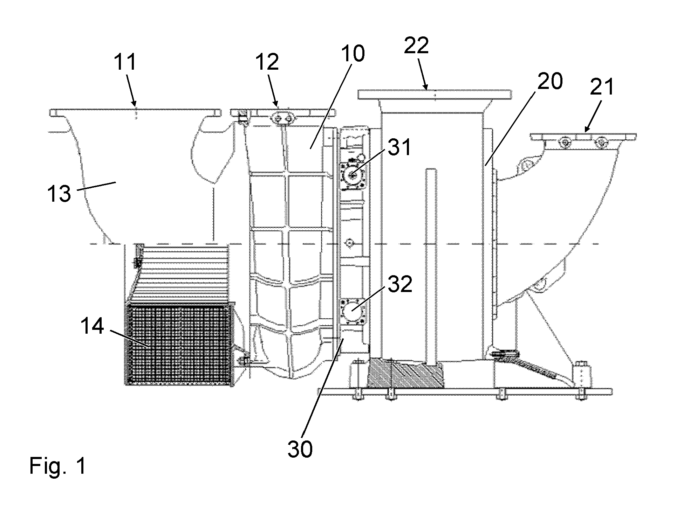

Fig. 1 zeigt in Seitenansicht entlang seiner Längsachse einen Abgasturbolader. Der Abgasturbolader umfasst einen Verdichter in einem Verdichtergehäuse 10 sowie eine Abgasturbine in einem Turbinengehäuse 20. Dazwischen ist das Lagergehäuse 30 angeordnet, in welchem die Welle des Abgasturboladers drehbar gelagert ist. Das Verdichtergehäuse umfasst einen Lufteintritt 11 von wo aus die Luft über das Verdichterrad und einen spiralförmigen Sammelbehälter dem Luftaustritt 12 zugeführt wird. Lufteintrittsseitig kann anstelle eines Luftansaugstutzens 13 auch ein Schalldämpfer 14 angeordnet sein. Turbinenseitig wird das Abgas durch den Gaseintritt 21 auf das Turbinenrad geleitet und anschliessend durch den Gasaustritt dem Auspuff zugeführt. Die Lager der Welle im Lagergehäuse 30 werden mit einem Schmiermittel geschmiert, welches unter Druck über einen Schmiermitteleintritt 31 ins Lagergehäuse geführt und über eine Schmiermittelaustritt 32 aus dem Lagergehäuse hinausgeführt wird. Um ein Austreten des Schmiermittels in Richtung Turbine oder Verdichter zu verhindern, weist die Welle im Lagergehäuse je eine Abdichtung Richtung Turbine und Verdichter auf.

Fig. 2 zeigt in einer Ansicht in Richtung der Wellenachse des Abgasturboladers eine Druckeinstelleinheit 4, welche erfindungsgemäss am Lagergehäuse 30 im Bereich des Schmiermitteleintritts 31 vorgesehen ist. Mittels der Druckeinstelleinheit 4 kann der Druck des Schmiermittels bevor dieses ins Lagergehäuse 30 des Abgasturboladers eintritt eingestellt werden. Die Druckeinstelleinheit 4 umfasst ein Einstellelement 5, mit welchem die konkrete Einstellung des Drucks vorgenommen werden kann. Optional umfasst die Druckeinstelleinheit weiter eine Druckanzeige, welche den am Schmiermittelaustritt anliegenden Druck des Schmiermittels anzeigt. Optional umfasst die Druckeinstelleinheit weitere Anschlussmöglichkeiten 7 für weitere Messinstrumente, beispielsweise um die Temperatur des Schmiermittels zu messen.

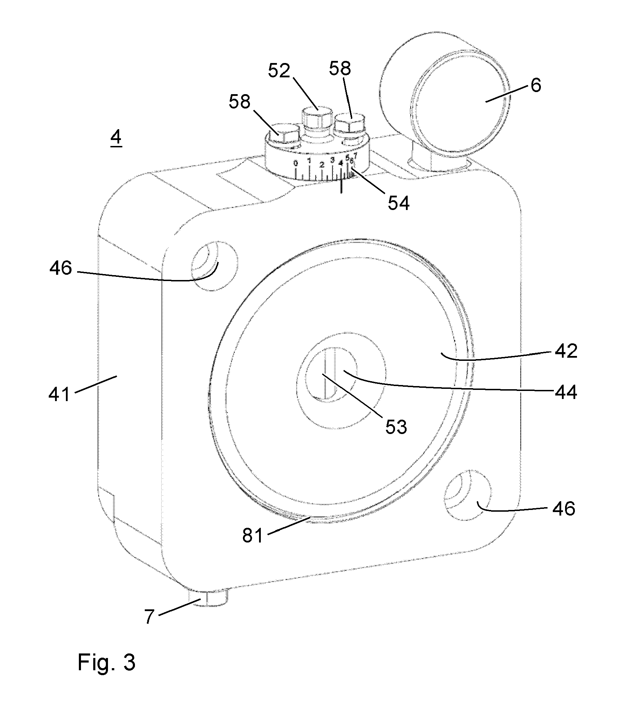

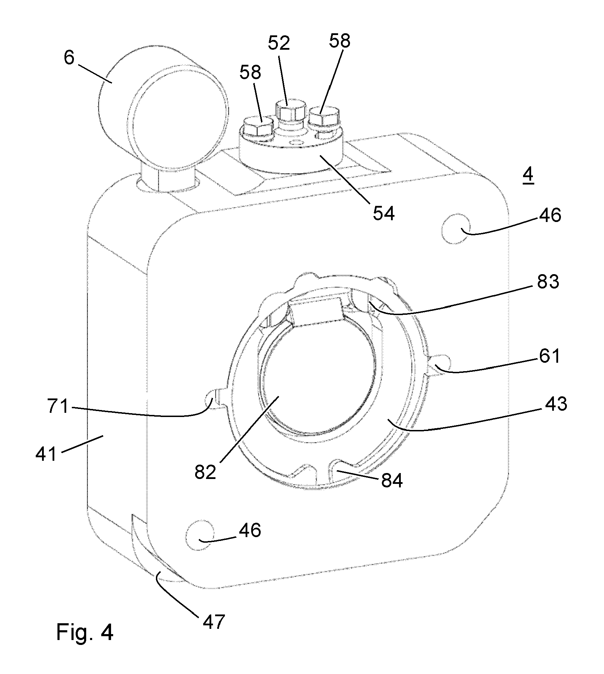

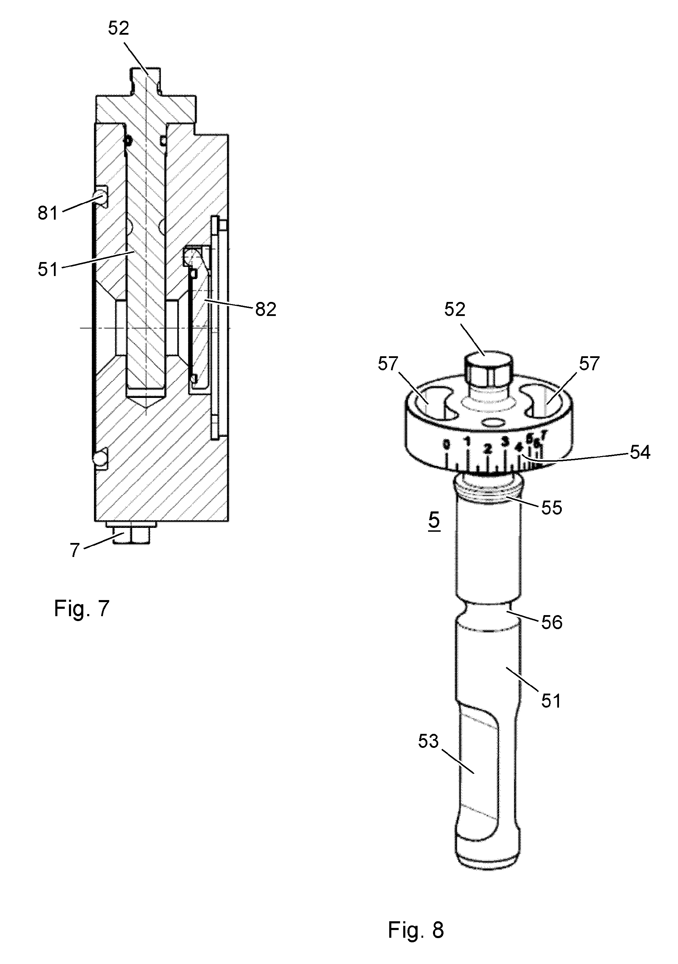

In der Schrägansicht der demontierten Druckeinstelleinheit 4 nach Fig. 3 ist die Schmiermitteleintrittsöffnung 42 auf der Vorderseite des Gehäuses 41 zu sehen. Die Schmiermittelaustrittsöffnung 43 auf der Rückseite des Gehäuses 41 ist in der Schrägansicht nach Fig. 4 zu sehen. Die Zuführung des Schmiermittels erfolgt mit einem Flansch, welcher auf die Vorderseite des Gehäuses 41 aufgesetzt wird. Die Befestigungsmittel zur Befestigung des Flansches am Gehäuse der Druckeinstelleinheit sind in den Figuren nicht dargestellt. Um die Schmiermitteleintrittsöffnung 42 herum ist optional ein Dichtring 81 angeordnet. Zwischen der Schmiermitteleintrittsöffnung 42 und der Schmiermittelaustrittsöffnung 43 ist eine Blende 44 mit verstellbarem Querschnitt angeordnet. Wie der Fig. 3 zu entnehmen ist, ist im innern der Bohrung zwischen der Schmiermitteleintrittsöffnung 42 und der Schmiermittelaustrittsöffnung 43 ein drehbares Einstellelement angeordnet, wobei vom drehbaren Einstellelement nur der Bereich des Schafts zu sehen ist, welcher eine Ausnehmung 53 aufweist und welcher durch Drehen die Durchlassfläche der Blende 44 zwischen der Schmiermitteleintrittsöffnung 42 und der Schmiermittelaustrittsöffnung 43 verändert. Das ganze drehbare Einstellelement 5 ist in der Fig. 8 im ausgebauten Zustand dargestellt. Es umfasst einen Schaft 51 mit einem mit einer Ausnehmung 53 versehenen Bereich, welcher allgemein einen Querschnitt aufweist, welcher nicht kreisrund und somit zumindest teilweise gegenüber dem Querschnitt des kreisrunden Schafts verjüngt ausgebildet ist, oder welcher im Innern eine durchgehende Bohrung aufweist. Aus einer Richtung senkrecht zur Achse des Schafts betrachtet ändert sich in diesem Bereich somit die Ausdehnung des Schafts senkrecht zur Betrachtungsrichtung (Durchmesser), bzw. seine auf die Ebene senkrecht zur Betrachtungsrichtung projizierte Fläche, in Abhängigkeit der Drehposition des Einstellelements. Das drehbare Einstellelement 5 umfasst weiter eine Auflagescheibe 54 sowie einen Kopf 52, welcher vorteilhafterweise als Schraubenkopf ausgebildet ist, und welcher den form- oder kraftschlüssigen Ansatz eines Werkzeugs zum Verstellen des drehbaren Einstellelements 5 erlaubt.

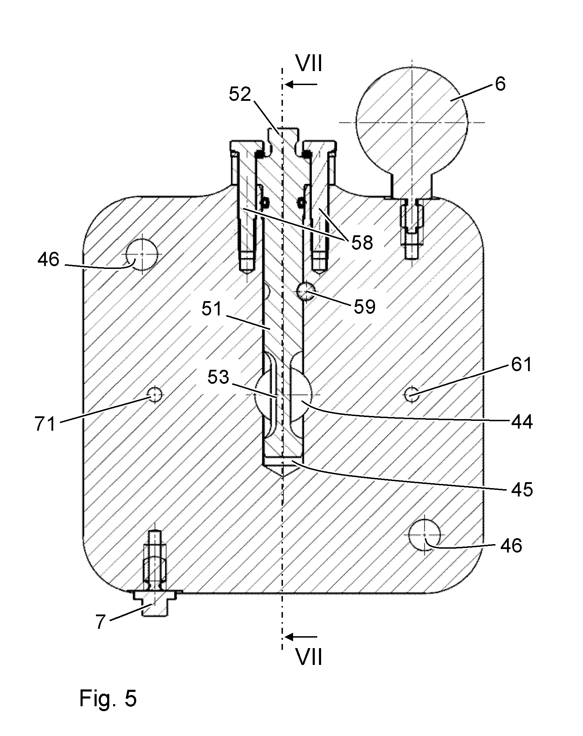

Das drehbare Einstellelement 5 umfasst Mittel zur axialen Sicherung vor unbeabsichtigtem herausfallen und/ oder zur axialen Befestigung. Die Sicherung erfolgt mittels einer zumindest teilweise umlaufenden Kerbe 56 im Schaft 51 des Einstellelements 5, in welcher ein Sicherungsstift 59 oder eine Sicherungsschraube eingreift, wie im Schnittbild nach Fig. 5 zu sehen ist. Ist die Kerbe 56 nur in einem Teil des Umfangs des Schafts eingelassen, kann sie gezielt zur Begrenzung des drehbaren Winkelbereichs des Einstellelements 5 verwendet werden. Der Sicherungsstift 59 ist im Gehäuse 41 der Druckeinstelleinheit 4 angeordnet und verhindert das Herausfallen des Einstellelements 5.

Zur axialen Befestigung des Einstellelements 5 umfasst dieses eine Auflagescheibe 54 in welche Befestigungsöffnungen 57 zur Aufnahme von Befestigungsmitteln 58 eingelassen sind. Die Befestigungsöffnungen 57 in der Auflagescheibe 54 sind vorteilhafterweise in Umfangsrichtung verlaufende Langlöcher, dank denen sich die Auflagescheibe 54 beim Drehen des Einstellelements 5 relativ zu den Befestigungsmittel 58 bewegen lässt. Die Langlöcher begrenzen als Anschlag für die Befestigungsmittel 58 den drehbaren Winkelbereich des Einstellelements 5. Nach erfolgter Einstellung des gewünschten Winkels werden die Befestigungsmittel 58 angezogen, so dass sich das Einstellelement 5 nicht mehr bewegen kann. In den beiden Schnittbildern nach Fig. 5 und Fig. 6 ist die Blende 44 zu sehen, welche optional seitlich über den maximalen Durchmesser des mit einer Ausnehmung 53 versehenen Bereichs hinausgeht, so dass bei geschlossener Blende doch noch ein minimaler Durchfluss an Schmiermittel gewährleistet ist.

Optional weist das Einstellelement auf der Auflagescheibe 54 oder an einem anderen Bereich etwa des Schafts eine von aussen ablesbare Skala auf, anhand welcher ein Operateur die eingestellte Blendenöffnung ablesen kann.

Optional weist die Druckeinstelleinheit 4 Mittel zur Messung von Schmiermitteleigenschaften im Bereich der Schmiermittelaustrittsöffnung auf. Hierfür sind ausgehende vom Bereich der Schmiermittelaustrittsöffnung 43 Zuführleitung 61 und 71 vorgesehen, welche bis an den Rand des Gehäuses 41 führen, wo Temperatur-Druck- oder andere Messgeräte auf die Zuführleitung aufgesetzt werden können. In den Figuren ist beispielhaft ein Druckmessgerät 6 gezeigt, welches am Ausgang der Zuführleitung 61 den Druck des Schmiermittels nach der Blende messen kann. Der Ausgang der zweiten Zuführleitung 71 ist mit einer Schraube verschlossen, dort kann beispielsweise ein Anlagebetreiber zu einem späteren Zeitpunkt seine Temperatur oder Drucksensoren anbringen, welche dann für die übergeordnete Anlagensteuerung Messwerte erfasst.

Optional weist die Druckeinstelleinheit 4 im Bereich der Schmiermittelaustrittsöffnung 43, also in Flussrichtung des Schmiermittels nach der Blende, eine Rückschlagklappe 82 auf, welche den Fluss des Schmiermittels in die eine Richtung zulässt und die andere Richtung sperrt. Die Rückschlagklappe, in Fig. 4 dargestellt, ist mit Befestigungsmitteln 83 am Gehäuse 41 befestigt. Die Befestigungsmittel selber sind mittels eines Sicherungsrings 84 gegen ein allfälliges Lösen und Herausfallen gesichert.

### BEZUGSZEICHENLISTE

- 10: Verdichtergehäuse
- 11: Lufteintritt
- 12: Luftaustritt
- 13: Ansaugstutzen
- 14: Filterschalldämpfer
- 20: Turbinengehäuse
- 21: Gaseintritt
- 22: Gasaustritt
- 30: Lagergehäuse
- 31: Schmiermitteleintritt
- 32: Schmiermittelaustritt
- 4: Druckeinstelleinheit
- 41: Gehäuse
- 42: Schmiermitteleintrittsöffnung
- 43: Schmiermittelaustrittsöffnung
- 44: Blende
- 45: Bohrung für Einstellelement
- 46: Befestigungsbohrung
- 47: Montagehilfe
- 5: Einstellelement
- 51: Schaft
- 52: Kopf des Einstellelements
- 53: Ausnehmung im Schaft des Einstellelements
- 54: Auflagescheibe des Einstellelements
- 55: Dichtungselement
- 56: Sicherungskerbe
- 57: Befestigungsöffnungen
- 58: Befestigungsmittel
- 59: Sicherungsstift
- 6,7: Messanzeige
- 61, 71: Zuführleitung für Messanzeige
- 81: Dichtelement
- 82: Rückschlagklappe
- 83: Befestigungselemente
- 84: Sicherungsring

## Patentansprüche

1. Abgasturbolader, umfassend einen Verdichter (10) und eine Turbine (20) sowie eine mit Schmiermittel versorgte Lagerung der rotierenden Teile in einem Lagergehäuse (30), wobei die Schmiermittel über einen Schmiermitteleintritt (31) in das Lagergehäuse (30) geführt werden, **dadurch gekennzeichnet, dass** am Lagergehäuse (30) im Bereich des Schmiermitteleintritts (31) eine Druckeinstelleinheit (4) vorgesehen ist, mit welcher der Druck des Schmiermittels bevor dieses ins Lagergehäuse (30) des Abgasturboladers eintritt eingestellt werden kann.

2. Abgasturbolader nach Anspruch 1, wobei die Druckeinstelleinheit (4) eine Schmiermitteleintrittsöffnung (42) und eine Schmiermittelaustrittsöffnung (43) umfasst, wobei zwischen der Schmiermitteleintrittsöffnung (42) und der Schmiermittelaustrittsöffnung (43) eine Blende (44) mit verstellbarem Querschnitt angeordnet ist.

3. Abgasturbolader nach Anspruch 2, wobei die Blende (44) mittels eines drehbaren Einstellelements (5) realisiert ist, welches einen Schaft (51) umfasst, der im Bereich der Blende eine Ausnehmung (53) aufweist, so dass durch Drehen des Einstellelements die Durchlassfläche der Blende (44) zwischen der Schmiermitteleintrittsöffnung (42) und der Schmiermittelaustrittsöffnung (43) verändert.

4. Abgasturbolader nach Anspruch 3, wobei das Einstellelement (5) einen aussenliegenden Bereich (54) umfasst, welcher mit einer Skala versehen ist.

5. Abgasturbolader nach einem der Ansprüche 3 oder 4, wobei das Einstellelement (5) Mittel (54, 56, 57, 58, 59) zur axialen Sicherung und/ oder zur axialen Befestigung umfasst.

6. Abgasturbolader nach Anspruch 5, wobei die Mittel zur axialen Sicherung eine zumindest teilweise umlaufende Kerbe (56) im Schaft (51) des Einstellelements (5) umfassen, in welche ein Sicherungsstifts (59) eingreift, wobei der Sicherungsstift (59) im Gehäuse (41) der Druckeinstelleinheit (4) angeordnet ist.

7. Abgasturbolader nach Anspruch 5, wobei die Mittel zur axialen Befestigung eine Auflagescheibe (54) umfassen, in welche Befestigungsöffnungen (57) zur Aufnahme von Befestigungsmitteln (58) eingelassen sind.

8. Abgasturbolader nach Anspruch 7, wobei die Befestigungsöffnungen (57) in der Auflagescheibe (54) in Umfangsrichtung verlaufende Langlöcher sind, dank denen sich die Auflagescheibe (54) beim Drehen des Einstellelements (5) relativ zu den Befestigungsmittel (58) bewegen lässt, wobei die Langlöcher mit ihrer Begrenzung in Umfangsrichtung als Anschlag für die Befestigungsmittel (58) den Drehwinkel des Einstellelements (5) begrenzen.

9. Abgasturbolader nach einem der vorangehenden Ansprüche, wobei die Druckeinstelleinheit (4) Mittel (6, 61, 7, 71) zur Messung von Schmiermitteleigenschaften im Bereich der Schmiermittelaustrittsöffnung (43) umfasst.

10. Abgasturbolader nach einem der vorangehenden Ansprüche, wobei die Druckeinstelleinheit (4) im Bereich der Schmiermittelaustrittsöffnung (43) eine Rückschlagklappe (82) umfasst, welche den Fluss des Schmiermittels in eine Richtung zulässt und die andere Richtung sperrt.
